# EUROPÄISCHE PATENTANMELDUNG

(11) **EP 2 481 954 A1**
(43) Veröffentlichungstag der Anmeldung: **01.08.2012**
(21) Anmeldenummer: 12000522.8
(22) Anmeldetag: 27.01.2012
(51) Int. Cl.: F16H 55/36, F16H 3/54, B60K 25/02, F02B 67/06, F16D 27/00

(54) **Anordnung mit einem Planetengetriebe für Kraftfahrzeug, Kraftfahrzeug sowie Verfahren zum Betreiben eines Planetengetriebes**

(30) Priorität: 01.02.2011 DE 102011010086
(71) Anmelder: Audi AG, 85045 Ingolstadt (DE)
(72) Erfinder: Misala, Andreas, 74343 Sachsenheim (DE)
(74) Vertreter: Lehle, Josef

(57) **Zusammenfassung**

Bei einer Anordnung mit einem Planetengetriebe, dass die Elemente Sonnenrad (16), Planetenträger (28) mit Planeten (26) und Hohlrad (34) aufweist, von denen zwei Elemente, insbesondere das Sonnenrad (16) und die Planetenträger (28) über einen Freilauf (36) miteinander gekoppelt sind, ist eine Kupplung (38) vorgesehen, die den Freilauf überbrücken kann. Das Überbrücken erfolgt nicht stets, sondern unter Kontrolle einer Steuereinrichtung, die Messsignale von Drehzahlsensoren empfängt welche eine Aussage über die relative Drehung in den beiden miteinander zu koppelnden Elementen (16, 28) machen. Beispielsweise kann ein Drehzahlsensor (72) die Drehzahl einer elektrischen Maschine (14) messen, ein anderer Drehzahlsensor (70) die Drehzahl einer Kurbelwelle (30) einer Verbrennungskraftmaschine (12) messen. In einem Kraftfahrzeug ist die Anordnung zur Kopplung einer solchen Verbrennungskraftmaschine (12) mit einer elektrischen Maschine (14) vorgesehen: Es sind unterschiedlichen Übersetzungsverhältnisse beim Starten oder Boosten und beim Generatorbetrieb möglich, zudem kann ein Klimakompressor (66) von der elektrischen Maschine (14) bei Stillstehen der Verbrennungskraftmaschine (12) angetrieben werden.

## Beschreibung

Die Erfindung betrifft eine Anordnung mit einem Planetengetriebe, wie sie in einem Kraftfahrzeug Verwendung finden kann. Ein Planetengetriebe weist die folgenden Elemente auf: Ein Sonnenrad, einen Planetenträger mit Planeten, die sich um das Sonnenrad drehen können, sowie ein Hohlrad, das die Planeten umgibt. Alle drei Elemente sind üblicherweise drehbar, wenn nicht ein Element festgehalten wird.

Beispielsweise ist es aus der DE 198 22 426 C2 bekannt, das Hohlrad mittels einer Bremsvorrichtung festzustellen.

Die DE 199 41 705 A1 beschreibt die Verwendung eines Planetengetriebes zur Kopplung einer elektrischen Maschine mit einer Verbrennungskraftmaschine in einem Kraftfahrzeug. Durch das Planetengetriebe werden unterschiedliche Übersetzungsstufen zwischen elektrischer Maschine und Verbrennungskraftmaschine ermöglicht. Ggf. können weitere Aggregate wie z. B. ein Kompressor für eine Klimatisierungsanlage des Kraftfahrzeugs zusätzlich vorgesehen sein. Der Kompressor kann hierbei über einen Riementrieb mit der elektrischen Maschine gekoppelt sein, der gleichzeitig zur Ankopplung der elektrischen Maschine an das Sonnenrad des Planetengetriebes dient.

Da die elektrische Maschine und die Verbrennungskraftmaschine in manchen Betriebsmodi unabhängig voneinander laufen sollen, ist es bekannt, in dem Planetengetriebe einen Freilauf zwischen zwei bestimmten (ausgewählten) Elementen vorzusehen. Ist beispielsweise die Kurbelwelle der Verbrennungskraftmaschine mit dem Planetenträger gekoppelt und das Sonnenrad mit einer Riemenscheibe für den Riementrieb, der die Kopplung mit der elektrischen Maschine bewirkt, sind Sonnenrad und Planetenträger die beiden ausgewählten Elemente, die über einen Freilauf miteinander gekoppelt sind. Hierbei verläuft die Durchlassrichtung des Freilaufs von dem Planetenträger zum Sonnenrad, d. h. von der Kurbelwelle zur Riemenscheibe und dem Riemen und damit dem Rotor der elektrischen Maschine. Die elektrische Maschine kann daher die Verbrennungskraftmaschine überholen, also mit einer schnelleren Drehzahl drehen als es die Drehzahl der Verbrennungskraftmaschine multipliziert mit der Übersetzung des Getriebes ist.

Ein Freilauf hat jedoch auch Nachteile. Beim Betrieb der Verbrennungskraftmaschine kommt es durch die Anregungen aus einer endlichen Zahl von Brennkammern zu Schwankungen in der Drehzahl. Dadurch kann es sein, dass der Freilauf immer wieder kurzfristig öffnet und schließt. Dies führt zu einem erhöhten Verschleiß des Freilaufs. Daneben kann dieser Betrieb des Freilaufs auch eine Lärmbeeinträchtigung verursachen.

Es ist Aufgabe der vorliegenden Erfindung, die Nachteile einer Anordnung mit Planetengetriebe und Freilauf zwischen zwei ausgewählten Elementen des Planetengetriebes zu beseitigen.

Die Aufgabe wird in einem Aspekt durch eine Anordnung mit den Merkmalen gemäß Patentanspruch 1 gelöst, in einem zweiten Aspekt durch ein Kraftfahrzeug mit den Merkmalen gemäß Patentanspruch 13 gelöst, und in einem weiteren Aspekt durch ein Verfahren mit den Merkmalen gemäß Patentanspruch 15 gelöst.

Bei der erfindungsgemäßen Anordnung sind zwei ausgewählte Elemente nicht nur über einen Freilauf miteinander gekoppelt, sondern gleichzeitig über eine Kupplung unmittelbar miteinander koppelbar. Zweck der Kupplung ist es, den Freilauf zu überbrücken. Naturgemäß kann die Kupplung nicht in jeder Betriebssituation unmittelbar geschlossen werden. Daher umfasst die Anordnung Einrichtungen zum zumindest indirekten Messen einer jeweiligen Drehzahl der beiden ausgewählten Elemente. Beispielsweise kann die Drehzahl eines mit einer elektrischen Maschine über einen Riementrieb gekoppelten Elements anhand der Drehzahl der elektrischen Maschine ermittelt werden, die Drehzahl des jeweiligen Elements ergibt sich dann aus der gemessenen Drehzahl multipliziert mit der Übersetzung des Riementriebs. Da die Drehzahlen der beiden ausgewählten Elemente bekannt sind, kann eine Steuereinrichtung, die die Messsignale von den Einrichtungen zum Messen empfängt, dann ausgelegt sein, die Kupplung unter zumindest einer vorbestimmten Bedingung bezüglich zumindest einer der gemessenen Drehzahlwerte zu schließen.

Mit anderen Worten wird durch die Steuereinrichtung die Kupplung tatsächlich dann geschlossen, wenn der Betriebszustand des Planetengetriebes eine Kopplung der beiden ausgewählten Elemente erfordert und diese aufgrund des Aufbaus der Kupplung möglich ist, ohne diese oder andere Elemente der Anordnung zu beschädigen.

Bevorzugt beinhaltet die vorbestimmte Bedingung insbesondere, dass die Drehzahlen der beiden ausgewählten Elemente um höchstens einen maximalen Wert voneinander abweichen. Der maximale Wert kann ein absoluter Wert einer Drehzahldifferenz zwischen den beiden ausgewählten Elementen sein, denn dann lässt sich durch die Steuereinrichtung die Steuerung besonders einfach realisieren. Bevorzugt hängt jedoch der maximale Wert von der Drehzahl eines der beiden Elemente ab, z. B. kann der maximale Wert ein prozentualer Wert der Drehzahl sein mit stets gleichem Prozentsatz, oder der maximale Wert kann in einer entsprechenden Tabelle in einem zur Steuereinrichtung zugehörigen Speicher abgelegt sein.

Bei einer bevorzugten Ausführungsform der Erfindung ist eines der beiden ausgewählten Elemente der Planetenträger. Das Element, das nicht zu den zwei bestimmten (ausgewählten) Elementen gehört, also das Hohlrad, wenn das ausgewählte Element das Sonnenrad ist, ist insbesondere über eine weitere Kupplung oder Bremse mit einem nicht-drehbaren Bauteil koppelbar, z. B. bei der Anordnung in einem Kraftfahrzeug mit einem verbrennungsmotorfesten Bauteil koppelbar.

Bevorzugt ist das zweite ausgewählte Element das Sonnenrad.

Die Anordnung ist somit bevorzugt umgekehrt wie bei der EP 1 282 772 B1 , bei der das Hohlrad mit dem Planetenträger über einen Freilauf gekoppelt ist und das Sonnenrad mit einem verbrennungsmotorfesten Bauteil koppelbar ist.

Die Kupplung ist bevorzugt wie folgt ausgeführt: Mit dem Sonnenrad ist ein Ring verbunden, und mit dem Planetenträger ist ein Permanentmagnet verbunden, der von einer (Teller-) Feder gegen den Ring gedrückt wird. Die Anordnung weist einen Elektromagneten für die Kupplung auf, durch den der Permanentmagnet dann von dem Ring wegziehbar ist. Durch den elektrischen Magneten ist die Kupplung insbesondere als elektrisch ansteuerbare Kupplung ausführbar, was das Zusammenwirken mit der Steuereinrichtung erleichtert. Dadurch, dass der Planetenträger aufgrund der Feder zunächst bei Nichtbestromung des Elektromagneten mit dem Sonnenrad gekoppelt ist, die Kupplung also im Grundzustand geschlossen ist, wird der Tatsache Rechnung getragen, dass bei den meisten oder häufigsten Betriebszuständen das Geschlossensein der Kupplung erforderlich ist.

In einer ersten Variante dieser bevorzugten Ausführungsform ist der Ring ein Reibring, d.h. der Permanentmagnet ist reibschlüssig mit dem Sonnenrad bzw. dem Ring verbunden.

Alternativ hierzu kann der Ring formschlüssig zu dem Permanentmagneten passen, wobei z. B. eine Verzahnung an dem Ring und dem Permanentmagneten ausgebildet sein kann (sodass eine Zahnkupplung bereitgestellt ist) oder wobei alternativ hierzu eine Klauenkupplung bereitgestellt sein kann.

Bei einer bevorzugten Ausführungsform ist, wie aus der DE 199 41 705 A1 an sich bekannt, das Hohlrad axial verschieblich ausgebildet, um unterschiedliche Übersetzungsstufen durch das Getriebe bereitzustellen. Das Hohlrad weist vorliegend bevorzugt einen Anker auf (der insbesondere einteilig mit dem restlichen Hohlrad ausgebildet ist), und die Anordnung umfasst einen Elektromagneten für die weitere Kupplung, durch den der Anker anziehbar ist und somit das Hohlrad verschiebbar ist. Diese Ausführungsform hat den Vorteil, dass das Hohlrad in einen Grundzustand frei umlaufen kann und lediglich bei Bestromung des zugehörigen Elektromagneten an einem weiteren Bauteil (z. B. einem verbrennungsmotorfesten Bauteil) festgehalten wird.

Bei einer bevorzugten Ausführungsform in der vorliegenden Anordnung ist vorgesehen, dass das Sonnenrad mit einer Riemenscheibe verbunden ist. Die Riemenscheibe kann Teil eines Riementriebs sein, über den beispielsweise eben eine elektrische Maschine an das Planetengetriebe angekoppelt wird. Dies ist teilweise aus Bauraumgründen in einem Kraftfahrzeug erforderlich, in dem die elektrische Maschine nicht in Verlängerung der Verbrennungskraftmaschine angeordnet sein kann, sondern seitlich von dieser angeordnet sein muss.

Zur optimalen Nutzung von Bauraum sind bevorzugt beide Elektromagneten bei den bevorzugten Ausführungsformen, die oben beschrieben wurden, unmittelbar radial innerhalb der Riemenscheibe angeordnet, d. h. unmittelbar benachbart zur Riemenscheibe, und zwar radial innen, sodass die Riemenscheibe die Gesamtheit aus Planetengetriebe und Kupplungen mit den Elektromagneten umgibt und daher zusammen mit weiteren Abdeckelementen abdichten kann. Die Anordnung der Elektromagneten und damit auch des Permanentmagneten bzw. des Ankers radial außerhalb des Herzstücks des Planetengetriebes ist deswegen vorteilhaft, weil dann das Planetengetriebe kompakt gebaut werden kann. Die Elektromagneten bestehen im wesentlichen jeweils aus einer Spule und einem weichmagnetischen Spulenkörper als deren Träger und zur Feldverstärkung. Dieser Spulenkörper kann auch so ausgeführt sein, dass die zwei Spulen einen gemeinsamen, speziell geformten Spulenkörper benutzen.

In einer weiteren bevorzugten Ausführungsform der Erfindung ist schließlich der Planetenträger mit einer Welle gekoppelt, auf der außerhalb des Planetengetriebes eine Schwingungsdämpfer- oder -tilgereinheit aufsitzt, die Schwingungen der Welle dämpft bzw. tilgt.

Solche Schwingungsdämpfer- oder -tilgereinheiten sind an sich bekannt. Es stellt eine vorteilhafte Ausgestaltungsform dar, diese Einheit unmittelbar an die Welle anzukoppeln, über die Moment eingetragen werden kann und damit auch Schwingungen eingetragen werden können.

In an sich bekannter Weise umfasst die Schwingungsdämpfereinheit z. B. ein Trägerblech, das sich mit der Welle mitdreht, und einen mit dem Trägerblech gekoppelten metallenen Dämpferring, der die Schwingungen aufnimmt. Der Dämpferring ist hierbei z. B. über ein elastisches Material wie Gummi gekoppelt, er kann aber auch in einem viskosen Öl gelagert sein.

Bei dem erfindungsgemäßen Kraftfahrzeug wird die erfindungsgemäße Anordnung in einer Ausführung vorgesehen, bei der die Riemenscheibe mit dem Sonnenrad gekoppelt ist. Eine Verbrennungskraftmaschine des Kraftfahrzeugs ist mit dem Planententräger gekoppelt, und eine elektrische Maschine ist über einen Riementrieb, der eben diese Riemenscheibe umfasst, mit dem Sonnenrad gekoppelt. Diese Anordnung hat den Vorteil, dass die elektrische Maschine besonders gut über den Riementrieb ankoppelbar ist und daher an einer geeigneten Stelle im Motorraum des Kraftfahrzeugs anordenbar ist. Das Hohlrad, das weder mit der elektrischen Maschine noch mit der Verbrennungskraftmaschine unmittelbar gekoppelt ist, kann dann frei umlaufen oder festgehalten sein. Diese Ausführungsform lässt sich besonders kompakt bauen, insbesondere in der Ausführungsform mit dem über einen Elektromagneten anziehbaren Anker als Teil des Hohlrads.

Bevorzugt misst ein Drehzahlmesser die Drehzahl eines Rotors der elektrischen Maschine und so die Drehzahl des Sonnenrads zumindest indirekt. Hingegen kann die Drehzahl der Kurbelwelle direkt und damit die Drehzahl des Planetenträgers gemessen werden. Die Anordnung des Drehzahlmessers an der elektrischen Maschine ist unaufwendiger als an einem Sonnenrad in dem Getriebe, in das man nicht übermäßig viele Kabel hineinführen möchte.

Das erfindungsgemäße Verfahren zum Betreiben eines Planetengetriebes, bei dem der Planetenträger und das Sonnenrad über einen Freilauf miteinander verbunden sind (dessen Durchlassrichtung insbesondere vom Planetenträger zum Sonnenrad läuft) beinhaltet, dass bei Gleichheit der Drehzahl des Planetenträgers und des Sonnenrades bis zu einem vorbestimmten Ma-βe hin (so definiert durch ein vorbestimmtes Kriterium) eine Kupplung zwischen Planetenträger und Sonnenrad geschlossen wird. Beispielsweise wird die Kupplung dann geschlossen, wenn die Drehzahlen maximal um einen vorbestimmten Wert voneinander abweichen, der für alle Drehzahlen gleich ist oder alternativ hierzu von der Drehzahl des Planetenträgers oder des Sonnenrads abhängig ist.

Nachfolgend wird eine bevorzugte Ausführungsform der Erfindung und der Bezug auf die Zeichnungen näher beschrieben, in der
- Fig. 1A: eine erfindungsgemäße Anordnung im axialen Schnitt veranschaulicht,
- Fig. 1 B: eine erfindungsgemäße Anordnung mit den daran angeschlossenen Komponenten eines erfindungsgemäßen Kraftfahrzeugs in schematischer Darstellung veranschaulicht,
- Fig. 2A: anhand der Schnittzeichnung aus Fig. 1A den Kraftfluss veranschaulicht, wie er bei einem Starten einer Verbrennungskraftmaschine durch eine elektrische Maschine bei der Anordnung gemäß 1 B erfolgt,
- Fig. 2B: hierzu eine schematische Darstellung gibt und
- Fig. 2C: eine schematische Darstellung gibt, die veranschaulicht, wie in einer exakten Umkehr des Kraftflusses gemäß Fig. 2A die elektrische Maschine mit einem hier gewählten Übersetzungsverhältnis von 3:1 als Generator betrieben werden kann,
- Fig. 3A: anhand der Schnittzeichnung gemäß Fig. 1A den Kraftfluss veranschaulicht, wie er beim Betreiben der elektrischen Maschine als Generator mit einem Übersetzungsverhältnis 1:1 auftritt,
- Fig. 3B: hierzu eine schematische Darstellung gibt,
- Fig. 4A: aufgrund des Schnittbildes aus Fig. 1A den Kraftfluss veranschaulicht, wie er bei einem Boosten der Verbrennungskraftmaschine durch die elektrische Maschine vorliegt und
- Fig. 4B: hierzu eine schematische Darstellung gibt,
- Fig. 5: anhand einer schematischen Darstellung veranschaulicht, wie sich beim Betreiben eines weiteren Aggregates durch die elektrische Maschine bei Stillstand der Verbrennungskraftmaschine die Drehzahlen einstellen.

Eine im Ganzen mit 10 bezeichnete Anordnung dient zum Koppeln einer Verbrennungskraftmaschine 12 mit einer elektrischen Maschine 14. Die Anordnung 10 umfasst insbesondere ein Planetengetriebe mit einem Sonnenrad 16, das eine Riemenscheibe 18 trägt. Die Riemenscheibe 18 ist Teil eines Riementriebes 20 mit einem Riemen 22 und einer Riemenscheibe 24, die sich mit einem in der Figur nicht gezeigten Rotor der elektrischen Maschine 14 mitdreht. Über den Riementrieb 20 ist somit die elektrische Maschine 14 mit dem Sonnenrad 16 gekoppelt. Zum Planetengetriebe 10 gehört ferner eine Mehrzahl von Planeten 26, vorliegend beispielsweise vier Planeten, die über einen Planetenträger oder -steg 28 miteinander gekoppelt sind. Der Planetenträger umfasst zwei Teile, einen Teil 28a, der mit der Kurbelwelle 30 der Verbrennungskraftmaschine 12 gekoppelt ist, und den sonnenradseitigen zweiten Teil 28b. Die beiden Teile 28a und 28b sind über die Planetenräder 26 miteinander verbunden, nämlich jeweils über einen diese durchdringenden Stift 32. Zum Planetengetriebe gehört ferner ein Hohlrad 34.

Vorliegend ist das Sonnenrad 16 mit einem Element 16' gekoppelt, das sich mit ihm mitdreht, und zwischen dem Element 16' und dem zweiten Teil des Planetenträgers 28b ist ein Freilauf 36 bereitgestellt. Die Orientierung des Freilaufs 36 ist dergestalt, dass die Durchlassrichtung von der Kurbelwelle 30 zum Riementrieb 20, also von der Verbrennungskraftmaschine 12 zur elektrischen Maschine 14 verläuft, wohingegen die elektrische Maschine 14 die Verbrennungskraftmaschine 12 überholen kann.

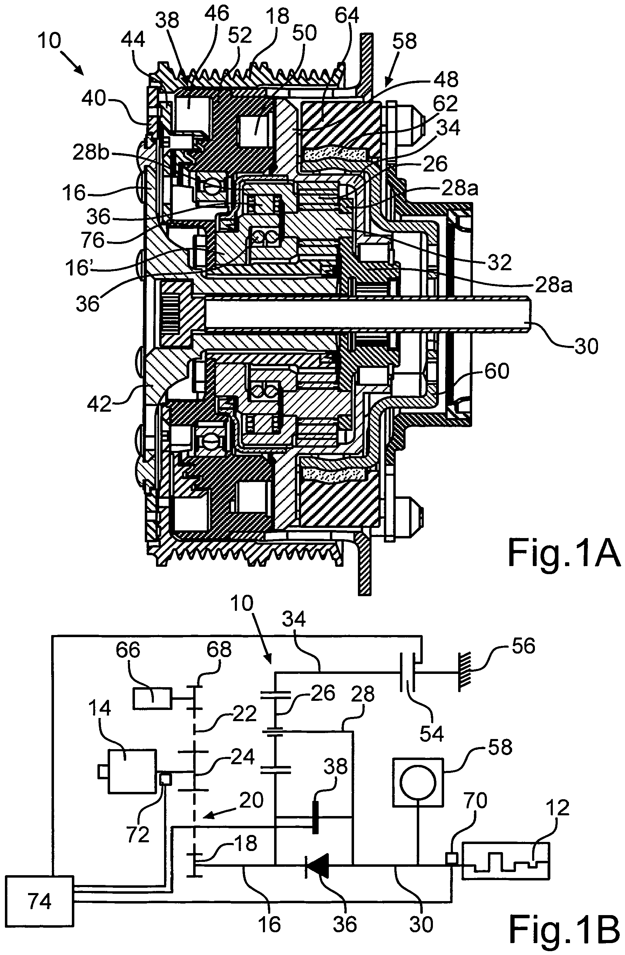

Vorliegend ist parallel zu dem Freilauf 36 eine erste Kupplung 38 vorgesehen, durch die das die Kurbelwelle 30 unmittelbar mit dem Sonnenrad koppelbar ist. Die Kupplung 38 ist derart verwirklicht, dass ein Reibring 40 mit dem Sonnenrad 16 verbunden ist, siehe Fig. 1A. Von einer Tellerfeder 42 wird eine permanentmagnetisierte Scheibe 44 gegen das Reibrad 40 gedrückt. Unter Wirkung eines ersten Elektromagneten 46 wird die permanentmagnetisierte Scheibe 44 von der Reibscheibe 40 gegen die Kraft der Tellerfeder 42 weggezogen und die Kupplung geöffnet. Im Grundzustand, bei nicht erregtem Elektromagneten 46, ist die Kupplung 38 somit geschlossen, siehe Fig. 1 B.

Das Hohlrad 34 ist vorliegend axial verschieblich ausgelegt. Einstückig mit dem Hohlrad ist ein Anker 48, der sich über denselben radialen Bereich erstreckt wie die Reibscheibe 40 und die permanentmagnetisierte Scheibe 44. Somit kann unmittelbar neben dem Elektromagneten 46 ein weiterer Elektromagnet 50 vorgesehen sein, nämlich auf einen Spulenkörper 52 zusätzlich eine zweite Wicklung aufgebracht sein, und dieser weitere Permanentmagnet kann den Anker 48 anziehen und damit das Hohlrad 46 festhalten. Dies ist in Fig. 1 B durch eine im Grundzustand - also bei nicht erregtem Elektromagneten 50 - offene Kupplung (oder Bremse) 54 veranschaulicht, die das Hohlrad 34 an ein verbrennungsmotorfestes Bauteil 56 des Kraftfahrzeugs anbinden kann.

Bei der Anordnung aus Fig. 1A ist ferner eine Dämpferanordnung 58 vorgesehen, die ein mit der Kurbelwelle 30 unmittelbar, d. h. auf Seite der Verbrennungskraftmaschine vor dem Planetengetriebe gekoppelte Trägerblech 60 umfasst, das eine gummielastische Masse 62 trägt, die wiederum einen Stahlring 64 hält, der sich somit mit dem Trägerblech 60 mitdrehen kann, aber gleichzeitig Schwingungen aufnehmen und abdämpfen kann.

Teil der Anordnung in dem Kraftfahrzeug ist der Kompressor 66 für eine Klimatisierungsanlage des Kraftfahrzeugs, der über eine Riemenscheibe 68 Teil des Riementriebs 22 ist und somit an die elektrische Maschine 14 auch das Sonnenrad 16 angekoppelt ist. Der Klimakompressor 66 kann daher sowohl durch die Verbrennungskraftmaschine 12 als auch durch die elektrische Maschine 14 betrieben werden.

Im laufenden Betrieb des Kraftfahrzeugs kann nicht jederzeit die Kupplung 38 unmittelbar geschlossen oder unmittelbar geöffnet werden. Vielmehr besteht der Sinn der Kupplung 38 darin, den Freilauf 36 dann zu überbrücken, wenn der Freilauf sonst übermäßige dynamische Lasten aufnehmen würde bzw. übermäßig laut arbeiten würde. Bei bestimmten Drehzahlverhältnissen zwischen der Drehzahl der Kurbelwelle 30 und der Drehzahl des Sonnenrads 16 mit der Riemenscheibe 18 lässt sich die Kupplung 38 schließen. Es gibt somit einen Drehzahlmesser 70 für die Drehzahl der Kurbelwelle 30. Anstatt die Drehzahl des Sonnenrads 16 direkt zu messen, wird vorliegend die Drehzahl eines Rotors der elektrischen Maschine 14 bzw. der Riemenscheibe 24 durch einen Drehzahlmesser 72 gemessen. Aus der Drehzahl, die der Drehzahlmesser 72 misst, lässt sich die Drehzahl des Sonnenrades 16 durch Division durch das Übersetzungsverhältnis des Riementriebs 20 ableiten. Teil der Anordnung in dem Kraftfahrzeug gemäß Fig. 1 B ist eine Steuereinrichtung 74, die dazu ausgelegt ist, die beiden Elektromagneten 46 und 50 zu erregen und somit die Kupplung 38 zu öffnen bzw. durch Entregen des Elektromagneten 46 zum Schließen zu bringen, und genauso auch die Kupplung 54 zu schließen (durch Erregen des Elektromagneten 50) bzw. zum Wiederöffnen zu bringen (durch Entregen des Elektromagneten 50).

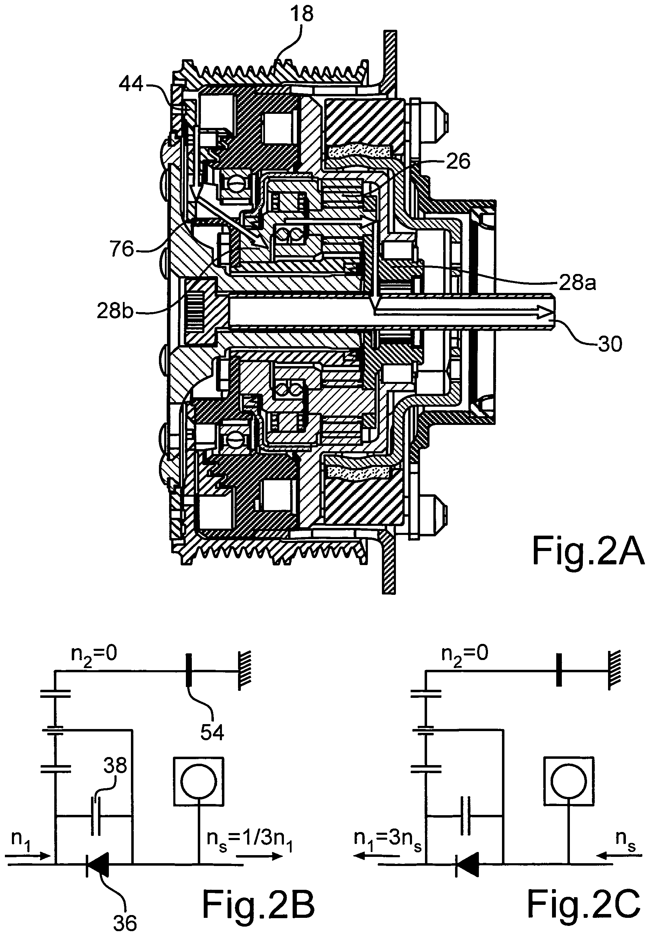

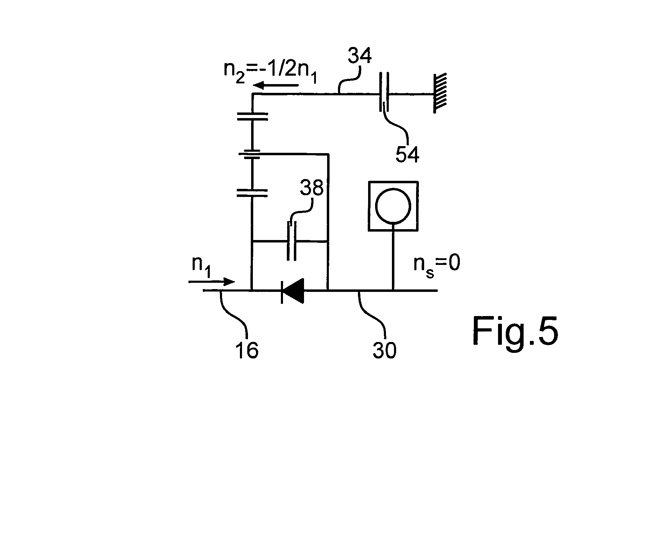

Die Steuereinrichtung 74 bewirkt das Herstellen der nachfolgend unter Bezug auf die Fig. 2A bis 5 dargestellten Betriebszustände in dem Kraftfahrzeug bei Gegebensein der geeigneten Bedingungen hierfür.

Begonnen sei mit dem Betriebszustand, dass die Verbrennungskraftmaschine 12 unter Zuhilfenahme der elektrischen Maschine 14 gestartet wird; in diesem Fall ist die elektrische Maschine 14 einfach der Starter für die Verbrennungskraftmaschine 12.

Wie in Fig. 2B zu sehen, wird durch Erregen des Elektromagneten 46 die erste Kupplung 38 geöffnet und die zweite Kupplung 54 durch Erregen des Elektromagneten 50 geschlossen.

Der Kraftfluss geht von der Riemenscheibe 18 über die permanentmagnetisierte Scheibe 44 und ein Koppelstück 76 in den zweiten Teil des Planetenträgers 28b, über die Planeten 26 in den ersten Teil 28a des Planetenträgers und damit in die Kurbelwelle 30; denn der Freilauf 36 sperrt hier. Bei einer Drehzahl n₁, mit der sich das Sonnenrad dreht, dreht sich der Planetenträger dann, wenn das Übersetzungsverhältnis zwischen Sonnenrad und Planeten ca. 3 beträgt mit einer Drehzahl nₛ = 1/3 n₁. Die elektrische Maschine 14 kann sich daher wesentlich schneller drehen als die Verbrennungskraftmaschine 12, die ja erst in Drehung versetzt werden soll. Vorteilhaft ist daran, dass wegen der Drittelung der Drehzahl das aufgebrachte Drehmoment verdreifacht ist. Beim Starten der Verbrennungskraftmaschine wird aber insbesondere ein hohes Drehmoment benötigt.

Das Hohlrad dreht sich nicht mit, sein Drehzahl n₂ ist also gleich 0.

In Umkehrung der Wirkrichtung der Pfeile aus Fig. 2A lässt sich auch denken, dass die Verbrennungskraftmaschine, die sich mit einer Drehzahl nₛ dreht, die elektrische Maschine betreibt, die dann als Generator arbeitet. Die Drehzahl n₁ der elektrischen Maschine beträgt dann = 3 · nₛ, siehe Fig. 2C.

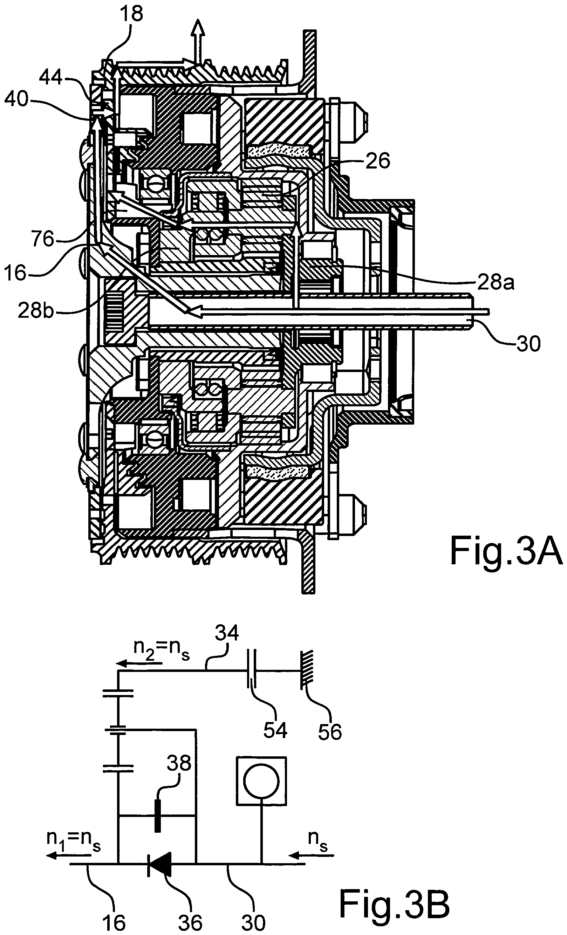

Beim Betreiben der elektrischen Maschine als Generator kann es aber vorteilhafter sein, wenn die Drehzahl der elektrischen Maschine nicht übermäßig hoch ist. Insbesondere bei hohen Drehzahlen der Verbrennungskraftmaschine ist der Faktor 3 zu hoch. In diesem Falle sorgt man gemäß Fig. 3B für ein Schließen der ersten Kupplung 38 und gleichzeitig ein Geöffnetsein der zweiten Kupplung 54. Bei einem Schließen der ersten Kupplung 38 ist das Sonnenrad 16 unmittelbar mit der Kurbelwelle 30 gekoppelt. Dadurch, dass das Hohlrad 34 von dem verbrennungsmotorfesten Bauteil 56 entkoppelt ist, kann es frei umlaufen. Der Kraftfluss geht dann über zwei parallele Pfade, nämlich zum einen unmittelbar von der Kurbelwelle 30 über den Freilauf 36 auf das Sonnenrad 16, von diesem über die Reibscheibe 40 und die permanentmagnetisierte Scheibe 44 auf die Riemenscheibe 18. Im parallelen Pfad wird Kraft über den ersten Planetenträgerteil 28a, die Planeten 26 und die beiden Planetenträger 28b, das Koppelstück 76 und schließlich ebenfalls über die permanentmagnetisierte Platte 44 an die Riemenscheibe 18 übertragen. Der Freilauf 36 ist überbrückt.

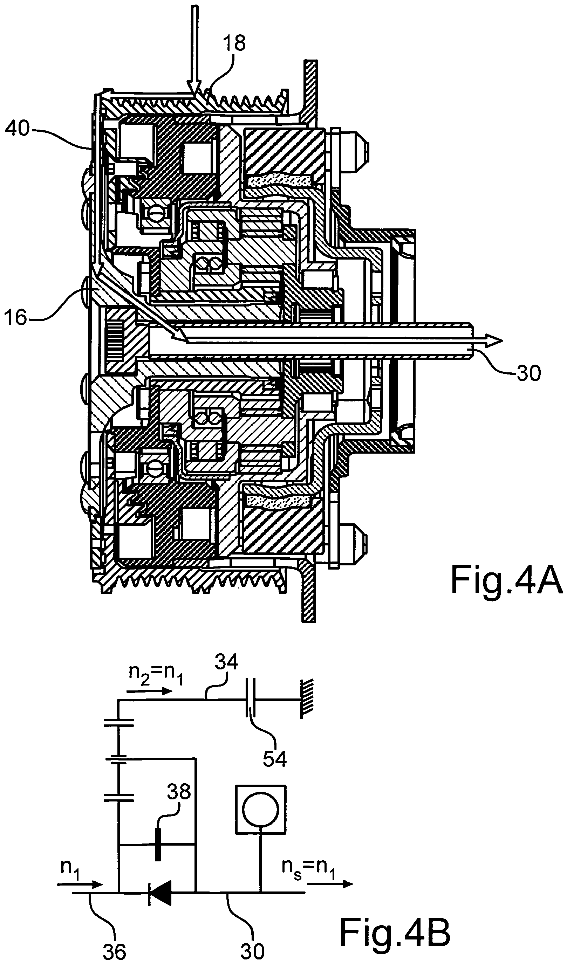

Bei gleicher Stellung der beiden Kupplungen 38 und 54 (Fig. 4B) wie beim Generatorbetrieb mit einer Übersetzung von 1:1 kann auch ein Boosten der Verbrennungskraftmaschine durch den Elektromotor mit dem Verhältnis 1:1 erfolgen. Auch hier sind die Drehzahlen von Sonnenrad 16 und Kurbelwelle 30 gleich. Das Hohlrad 34 kann frei umlaufen. Der Kraftfluss verläuft über die Riemenscheibe 18, die Reibplatte 40 und das Sonnenrad 16 an die Kurbelwelle 30. Das Boosten kann beim laufenden Betrieb des Kraftfahrzeugs zur Unterstützung der Verbrennungskraftmaschine, beispielsweise bei einem schnellen Beschleunigen oder zur Verringerung des Kraftstoffverbrauchs erfolgen. Sonst kann es insbesondere auch dann erfolgen, wenn die Verbrennungskraftmaschine gerade heruntergefahren und schon ausgeschaltet ist und sich die Kurbelwelle 30 nur noch mit geringer Drehgeschwindigkeit dreht: dann kann aus dem laufenden Betrieb heraus die elektrische Maschine das Sonnenrad schnell auf eine Drehgeschwindigkeit bringen, die die Kurbelwelle 30 hat, und die erste Kupplung 38 kann kurzzeitig geschlossen werden.

Ein weiterer Betriebszustand der Anordnung 10 ist die so genannte Standklimatisierung: Bei der Standklimatisierung wird durch die elektrische Maschine 14 der Kompressor 66 für die Klimaanlage über den Riementrieb 20 angetrieben, die Verbrennungskraftmaschine 12 ist aber abgestellt. Hier werden dann beide Kupplungen 38 und 44 geöffnet, damit die Kurbelwelle 30 stehen kann (Drehzahl nₛ=0) und gleichzeitig sich das Sonnenrad 16 mit einer Drehgeschwindigkeit n₁ drehen kann. Das Hohlrad 34 läuft dann mit der halben entgegen gesetzten Drehgeschwindigkeit n₂ = - ½ n₁ um. (Hier muss kein Kraftfluss dargestellt werden).

Durch die beschriebene Anordnung 10 ist es somit möglich, dass die elektrische Verbrennungskraftmaschine mit einer Übersetzung von 3:1 startet und mit einer Übersetzung von 1:1 boostet. Umgekehrt kann die elektrische Maschine als Generator betrieben werden, der mit einem Übersetzungsverhältnis von 1:3 oder 1:1 wahlweise dreht. Schließlich kann durch die elektrische Maschine eine Standklimatisierung bei ausgeschalteter Verbrennungskraftmaschine erfolgen. Durch die Kupplung 38 wird insbesondere der Freilauf 36 überbrückt und damit entlastet, weil der Kraftfluss dann nicht ausschließlich über den Freilauf verläuft. Dies führt zu geringerem Verschleiß und weniger Lärm.

## Patentansprüche

1. Anordnung (10) mit einem Planetengetriebe, das die Elemente Sonnenrad (16), Planetenträger (28), Planeten (26) und Hohlrad (34) aufweist, von denen zwei ausgewählte Elemente (16, 28) über einen Freilauf (36) miteinander gekoppelt sind und gleichzeitig über eine Kupplung (38) unmittelbar miteinander koppelbar sind, wobei die Anordnung Einrichtungen (70, 72) zum zumindest indirekten Messen einer jeweiligen Drehzahl der beiden ausgewählten Elemente (16, 28) aufweist und eine Steuereinrichtung (74) aufweist, welche ausgelegt ist, Messsignale von den Einrichtungen (70, 72) zum Messen zu empfangen und die Kupplung (38) unter zumindest einer vorbestimmten Bedingung bezüglich zumindest einer der Drehzahlen zu schließen.

2. Anordnung 10 nach Anspruch 1, bei der die zumindest eine vorbestimmte Bedingung beinhaltet, dass die Drehzahlen der beiden ausgewählten Elemente um höchstens einen maximalen Wert voneinander abweichen, der vorzugsweise von der Drehzahl eines der Elemente abhängig ist.

3. Anordnung (10) nach Anspruch 1 oder 2, bei der das eine der beiden ausgewählten Elemente der Planetenträger (28) ist und das Element (34), welches nicht ausgewähltes Element ist, über eine weitere Kupplung (54) mit einem nicht drehbaren Bauteil (56) koppelbar ist.

4. Anordnung (10) nach Anspruch 3, bei der das zweite ausgewählte Element das Sonnenrad (16) ist.

5. Anordnung (10) nach Anspruch 4, bei der mit dem Sonnenrad (16) ein Ring (40) verbunden ist und mit dem Planetenträger (28b) ein Permanentmagnet (44) verbunden ist, der von einer Feder (42) gegen den Ring (40) gedrückt wird, wobei die Anordnung (10) einen Elektromagneten (46) für die Kupplung (38) aufweist, durch den der Permanentmagnet (44) von dem Ring (40) wegziehbar ist.

6. Anordnung (10) nach Anspruch 5, **dadurch gekennzeichnet, dass** der Ring ein Reibring (40) ist.

7. Anordnung (10) nach Anspruch 5, **dadurch gekennzeichnet, dass** der Ring und der Permanentmagnet formschlüssig zueinander ausgebildet sind.

8. Anordnung (10) nach einem der Ansprüche 4 bis 7, bei der das Hohlrad (34) axial verschieblich ist und einen Anker (48) aufweist, wobei die Anordnung (10) einen Elektromagneten (50) für die weitere Kupplung (54) aufweist, durch den der Anker (48) anziehbar und somit das Hohlrad (34) verschiebbar ist.

9. Anordnung (10) nach einem der Ansprüche 4 bis 8, bei der das Sonnenrad (16) mit einer Riemenscheibe (18) verbunden ist.

10. Anordnung (10) nach Anspruch 9 in dessen Rückbezug auf die Ansprüche 5 und 6, bei der beide Elektromagneten (46, 50) unmittelbar radial innerhalb der Riemenscheibe (18) angeordnet sind und bevorzugt durch Wicklungen auf einem gemeinsamen Spulenkörper bereitgestellt sind.

11. Anordnung (10) nach einem der Ansprüche 4 bis 10, bei der der Planetenträger (28) mit einer Welle (30) gekoppelt ist, auf der außerhalb des Planetengetriebes eine Schwingungsdämpfereinheit (58) oder eine Schwingungstilgereinheit aufsitzt, die Schwingungen der Welle (30) dämpft oder tilgt.

12. Anordnung (10) nach Anspruch 11, bei der die Schwingungsdämpfereinheit (58) ein Trägerblech (60) und einem mit dem Trägerblech gekoppelten metallenen Dämpferring (64) aufweist.

13. Kraftfahrzeug mit einer Anordnung (10) nach Anspruch 9 oder 10 oder Anspruch 11 oder 12 in Rückbezug auf Anspruch 9 oder 10, mit einer Verbrennungskraftmaschine (12), welche mit dem Planetenträger (28) gekoppelt ist, und mit einer elektrischen Maschine (14), die über einen Riementrieb (20), der die Riemenscheibe (18) umfasst, mit dem Sonnenrad (16) gekoppelt ist.

14. Kraftfahrzeug nach Anspruch 13, bei dem ein Drehzahlmesser (72) bereitgestellt ist, der ausgelegt ist, die Drehzahl eines Rotors der elektrischen Maschine (14) zu messen und so die Drehzahl des Sonnenrads (16) indirekt zu messen.

15. Verfahren zum Betreiben eines Planetengetriebes, bei dem der Planetenträger (28) und das Sonnenrad (16) über einen Freilauf (36) miteinander verbunden sind, wobei bei Gleichheit der Drehzahlen des Planenträgers (28) und des Sonnenrads (16) bis zu einem vorbestimmten Maße eine Kupplung (38) zwischen Planetenträger (28) und Sonnenrad (16) geschlossen wird.

16. Verfahren nach Anspruch 15, bei dem die Kupplung (38) geschlossen wird, wenn die Drehzahlen maximal um einen vorbestimmten Wert voneinander abweichen, der für alle Drehzahlen gleich ist.

17. Verfahren nach Anspruch 15, bei dem die Kupplung (38) geschlossen wird, wenn die Drehzahlen maximal um einen vorbestimmten Wert voneinander abweichen, der von der Drehzahl des Planetenträgers (28) oder der Drehzahl des Sonnenrads (16) abhängig ist.
